# EUROPÄISCHE PATENTSCHRIFT

(11) **EP 1 969 713 B1**
(45) Veröffentlichungstag und Bekanntmachung des Hinweises auf die Patenterteilung: **30.12.2009**
(21) Anmeldenummer: 05816422.9
(22) Anmeldetag: 29.11.2005
(51) Int. Cl.: H02P 29/02, G01R 31/34, G01R 19/25

(54) **ÜBERWACHUNGSEINHEIT ZUR LASTÜBERWACHUNG EINES ELEKTRISCHEN MOTORS**
MONITORING UNIT FOR MONITORING THE LOAD OF AN ELECTRIC MOTOR
UNITE DE SURVEILLANCE PERMETTANT DE SURVEILLER LA CHARGE D'UN MOTEUR ELECTRIQUE

(43) Veröffentlichungstag der Anmeldung: 17.09.2008
(73) Patentinhaber: SIEMENS AKTIENGESELLSCHAFT, 80333 München (DE)
(72) Erfinder: FLEISCHMANN, Roland, 91327 Gössweinstein (DE); HARMSEN, Peter, 92521 Schwarzenfeld (DE); MAIER, Martin, 92681 Erbendorf (DE)
(86) Internationale Anmeldenummer: PCT/DE2005/002152
(87) Internationale Veröffentlichungsnummer: WO 2007/062612

(56) Entgegenhaltungen:
- EP-A- 0 632 283
- US-A- 5 689 194
- US-B1- 6 430 518

## Beschreibung

Die Erfindung betrifft eine Überwachungseinheit und ein Verfahren zur Lastüberwachung eines elektrischen Motors.

Eine derartige Überwachungseinheit bzw. Verfahren kommt in Verbindung mit Motoren und Antrieben zum Einsatz, insbesondere bei Antrieben und Motoren, die in Automatisierungsanlagen integriert sind, wie im Dokument EP0632283 beschrieben.

Eine derartige Überwachungseinheit kann beispielsweise als elektronisches Überwachungsrelais ausgeführt werden. Die Überwachungseinheit weist in der Regel eine Messeinheit auf, die eine lastrelevante Größe misst. Weiterhin wird mittels einer Auswerteeinheit die gemessene Größe dahingehend ausgewertet, dass eine Überwachung einer Last beispielsweise eines Motors oder eines Antriebs gewährleistet ist.

Eine lastrelevante Größe stellt beispielsweise der Motorstrom I oder der Leistungsfaktor cosϕ eines Antriebs oder eines Motors dar. In der Regel werden bei den Lastüberwachungsrelais Schwellenwerte für die lastrelevante Größe eingestellt und bei deren Unter- oder Überschreitung ein Schaltrelais betätigt.

Als lastrelevante Größe kann beispielsweise der Leistungsfaktor cosϕ dienen, wobei ϕ der Phasenwinkel zwischen der Versorgungsspannung des Antriebs und dem dabei fließenden Motorstrom darstellt. Der Leistungsfaktor cosϕ kann dann mittels voreingestellten Schwellen überwacht werden. Die Einstellung eines Toleranzbereiches ist ebenfalls möglich.

Weiterhin wird in der Praxis auch der Motorstrom als lastrelevante Größe zur Überwachung verwendet.

Die lastrelevante Größe wird in der Regel in das Verhältnis zum Drehmoment des Motors gestellt. Auf diese Weise ist eine direkte Zuordnung der lastrelevanten Größe zu einem Drehmoment des Motors gegeben. Auf diese Weise fungiert die lastrelevante Größe als Indikation für das derzeitig vorliegende Drehmoment des Motors. In diesem Zusammenhang ist es wünschenswert, wenn das Verhältnis der lastrelevanten Größe zum Drehmoment in möglichst vielen Drehmomentbereichen linear ist. Leider ist dies in der Regel nicht der Fall. Unabhängig davon welche Größe als lastrelevante Größe gewählt wird, ist das Verhältnis der lastrelevanten Größe zum Drehmoment des Motors keineswegs linear. Dies führt dazu, dass in ganz bestimmten Drehmomentbereichen eine fehlerbehaftete Berechnung der lastrelevanten Größe stattfindet. In diesen Bereichen ist die lastrelevante Größe folglich nicht mehr zur Lastüberwachung des Motors oder des Antriebs geeignet. Folglich ist man bei der Definition des Toleranzbereiches oder der Definition der Schwellen auf ganz bestimmte Drehmomentbereiche beschränkt. Eine Linearisierung der lastrelevanten Größe über den gesamten Drehmomentbereich würde eine freie Toleranzbereich- bzw. Schwellenwahl ermöglichen.

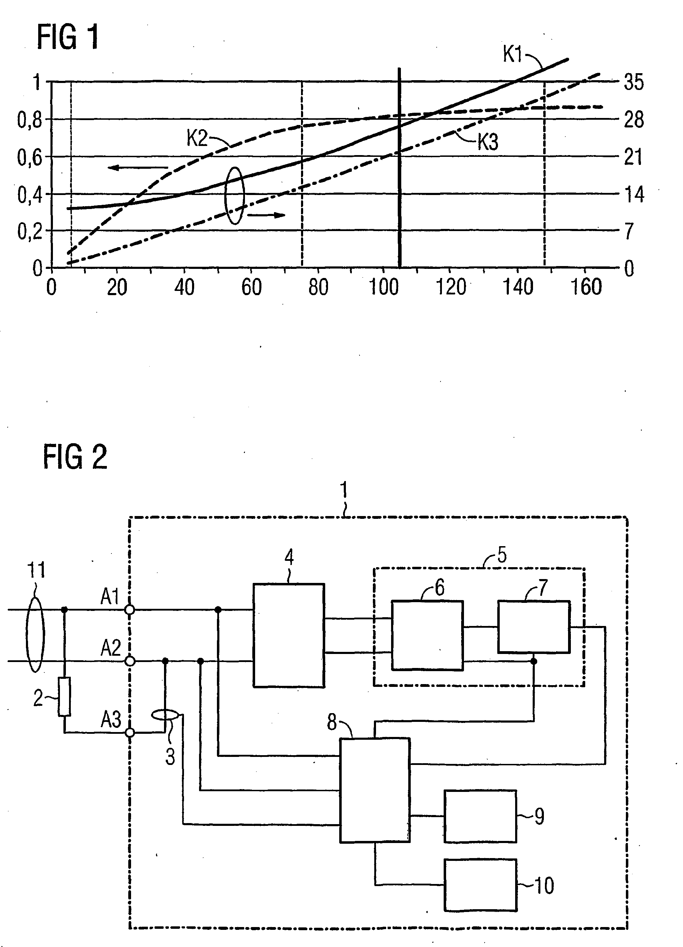

Die Figur 1 zeigt lastrelevante Größen wie der bereits erwähnte Motorstrom und den Cosinus des Phasenwinkels ϕ aufgetragen über dem Drehmoment eines Motors. Wird als lastrelevante Größe der Motorstrom gewählt, so ist die Kurve K1 mit der dazugehörigen Skala in Ampere auf der rechten Seite einschlägig. Für höhere Drehmomente zeigt diese lastrelevante Größe einen im Wesentlichen linearen Verlauf. Bei kleineren Drehmomenten hingehen flacht diese Kurve zusehends ab und reduziert somit die Aussagekraft bzw. Entscheidungskraft, die bei der Verwendung des Motorstroms als lastrelevante Größe gegeben ist. Wird hingegen der Phasenwinkel als lastrelevante Größe gewählt, so ist Kurve K2 relevant. Die zugehörige vertikale Achse befindet sich auf der linken Seite des Graphen. In diesem Fall reicht die lastrelevante Größe von 0 bis 1. Ein gegenteiliges Problem im Vergleich zum Motorstrom als lastrelevante Größe stellt sich ein. Die Kurve, die auf den Phasenwinkel basiert, legt ein vergleichsweise lineares Verhältnis bei kleineren Drehmomenten zutage, flacht aber bei höheren Drehmomenten immer mehr ab. Das Setzen von Schwellen bzw. Toleranzbereichen im Bereich der höheren Drehmomente ist folglich schwierig und fehlerbehaftet. Folglich ist weder bei der Verwendung des Motorstromes noch des Phasenwinkels als lastrelevante Größe eine über den gesamten Drehmomentbereich lineare Kurve und somit eine einwandfreie Lastüberwachung möglich.

Die beschriebenen Methoden der Lastüberwachung haben folgende Nachteile:

Derzeit existierende Geräte können bei Leerlaufströmen unter 0,5 A keine definierte Messung mehr durchführen und arbeiten nur an einer Netznennspannung. Eine Auswertung führt folglich zu keinem Ergebnis und macht eine Überwachung bei geringen Leerlaufströmen unmöglich.

Bisher wurde, um eine Lastüberwachung während des Anlaufprozesses des Motors zu gewährleisten, das Prinzip des Ruhestroms und der Verzögerungszeit kombiniert. Hierfür wird eine zusätzliche Logik, beispielsweise eine speicherprogrammierbare Steuerung SPS, notwendig, wenn nach dem Anlegen der Netzspannung eine elektrische Einbindung des Lastüberwachungsrelais vor dem Schütz im Motorzweig realisiert sein soll. Es ist wünschenswert, dass das Lastüberwachungsrelais in einem Motorabzweig auch elektrisch vor dem Ein-/Ausschaltschütz ohne zusätzliche Logik anschließbar ist. Hierfür ist erforderlich, dass die Anlaufüberbrückungszeit für den Antrieb erst durch den beginnenden Stromfluss gestartet wird. Da die Erfassung des Motorstroms bei sehr kleinen Strömen nicht möglich ist, muss stets auf eine weitere zusätzliche Logik zurückgegriffen werden.

Aus EP 0 788 210 A1 ist ein elektronisches Relais bekannt, welches eine Größe basierend auf dem Phasenwinkel mittels einer Messeinheit isoliert und zur Lastüberwachung mittels eines Mikroprozessors verwendet.

Der Erfindung liegt die Aufgabe zugrunde eine Überwachungseinheit zur Lastüberwachung eines elektrischen Motors anzugeben, wobei Schwellenwerte der Überwachung praktisch über den gesamten Drehmomentbereich des Motors linear einstellbar sind.

Diese Aufgabe wird bei einer Überwachungseinheit der eingangs genannten Art durch die Merkmale des Anspruchs 1 gelöst. Ferner wird diese Aufgabe durch ein Verfahren nach Anspruch 7 gelöst.

Erfindungsgemäß erfasst die Überwachungseinheit sowohl einen Motorstrom und den Phasenwinkel zwischen Versorgungsspannung und dem Motorstrom. Beide Größen werden nach der Erfassung des Weiteren in einer Auswerteeinheit aufbereitet, bzw. es werden Funktionen oder Indikationsgrößen basierend auf dem erfassten Motorstrom und Phasenwinkel gebildet. Die Überwachungseinheit weist Mittel zur Bildung einer Indikationsgröße aus dem Motorstrom und dem Phasenwinkel auf. Die Indikationsgröße basiert hierbei auf den Motorstrom und dem Phasenwinkel, wobei beide erfassten Größen hierfür beispielsweise durch weitere mathematische oder elektrische Funktionen aufbereitet werden. Die Indikationsgröße wird als Maß zur Überwachung der elektrischen Last des Motors eingesetzt. Die Indikationsgröße ist derartig gewählt, dass die Abhängigkeit der Indikationsgröße zum Drehmoment bzw. Last des Motors linear ist. Weiterhin können die Mittel zur Bildung einer Indikationsgröße zur fortwährenden Anpassung an die charakteristischen Eigenschaften des zu überwachenden Motors angepasst werden. Eine aktive lineare Anpassung der Indikationsgröße ist somit zur weiteren Optimierung oder zur Einstellung auf unterschiedliche Motoren oder Antriebe möglich.

Eine weitere vorteilhafte Ausführungsform einer Überwachungseinheit zur Lastüberwachung verwendet eine Indikationsgröße, die aus dem Produkt des Motorstroms mit dem Cosinus des Phasenwinkels gebildet ist. Da beide lastrelevanten Größen in verschiedenen Last- bzw. Drehmomentbereichen unterschiedlich gut funktionieren, wird durch ein Kompensationseffekt eine Linearisierung durch die Verwendung dieses Produktes aus Motorstrom mit dem Cosinus des Phasenwinkels erreicht. Des Weiteren sind Kombinationen anderer lastrelevanter Größen denkbar, die durch einen gegenseitigen Kompensationseffekt zu einer Linearisierung des Verhältnisses von der Indikationsgröße zum Drehmoment bzw. der Last führt.

Vorteilhafterweise kann die Indikationsgröße aus einem Produkt einer ersten Funktion, die aus dem Motorstrom gebildet ist und aus einer zweiten Funktion, die aus dem Phasenwinkel gebildet ist, gebildet werden. Durch ein weiteres Einbinden elektronischer oder mathematischer Funktionen sind mittels einer ersten und/oder einer zweiten Funktion die erfassten lastrelevanten Größen Motorstrom und Phasenwinkel weiter dahingehend konditionierbar, dass die lineare Anpassung weiter optimiert wird. Eine weitere Linearisierung führt dazu, dass ein direkter Bezug der Indikationsgröße zur aktuellen Motorbelastung gewährleistet ist.

Vorteilhafterweise ist die Überwachungseinheit dazu vorgesehen mindestens eine Schutzmaßnahme einzuleiten, falls mindestens ein Schwellenwert und/oder ein Toleranzbereich der Integrationsgröße überschritten bzw. verletzt wird. Diese Vorgehensweise ist herkömmlich, aber in Verbindung mit der linearisierten Indikationsgröße-Drehmomentkennlinie führt sie zu einer besseren Einstellbarkeit der Schwellenwerte und somit zu einer direkteren Überwachung des Motors. Weiterhin erweitert die linearisierte Kennlinie den Überwachungsbereich des Motors von sehr geringen Einschaltströmen bis zu hohen Motorströmen beim Fahren einer Spitzenlast.

Durch den erweiterten Erfassungsbereich und eine Weitspannungsversorgung ergibt sich eine universelle Einsatzmöglichkeit für die Überwachungseinheit. Weiterhin kommt die Überwachungseinheit hierbei ohne eine zusätzliche Logikschaltung, in Form einer SPS, aus, wenn die Überwachungseinheit vor dem Schütz im Motorabzweig elektrisch angeordnet wird. Dies hat positive Auswirkungen, die sich bei anderen Geräten bemerkbar machen. So kann beispielsweise die Spannungsversorgung für die Überwachungseinheit nicht nur bei einer Nennspannung mit Toleranz ausgelegt sein (zum Beispiel AC 400 V, ± 10%), sondern eine Weitspannungsausführung mit einem Arbeitsbereich von beispielsweise AC 90 bis AC 690 V ist realisierbar.

Weitere vorteilhafte Ausbildungen und bevorzugte Weiterbildungen der Erfindung sind der Figurenbeschreibung und/oder den Unteransprüchen zu entnehmen.

Im Folgenden wird die Erfindung anhand der in den Figuren dargestellten Ausführungsbeispiele näher beschrieben und erläutert.

Es zeigen:
- FIG 1: einen Graphen, der mögliche Indikationsgrößen in Abhängigkeit vom Drehmoment eines Motors zeigt, und
- FIG 2: ein Blockschaltbild eines Ausführungsbeispiels einer Überwachungseinheit.

Figur 1 zeigt einen Graphen, der mögliche Indikationsgrößen in Abhängigkeit vom Drehmoment eines Motors zeigt. Die linke vertikale Achse ist in Verbindung mit der Kurve K2 zu sehen, die auf einer Indikationsgröße basiert, die auf den Cosinus des Phasenwinkels basiert. Wie bereits in der Einleitung gezeigt, verhält sich die Kurve K2 bei kleinen Drehmomenten des Motors nahezu linear, flacht aber bei mittleren und höheren Drehmomenten zusehends ab und macht eine zuverlässige Kontrolle bzw. eine zuverlässige Einleitung von Schutzmaßnahmen unmöglich. In Figur 1 ist zu sehen, dass ab ca. 75% des Motornenndrehmomentes (angedeutet durch den senkrechten fettgedruckten Balken) eine mögliche Überwachung nicht mehr möglich ist. Dies bedeutet, dass die übrigen 25% des Drehmomentbereiches nicht überwacht werden können.

Im Graphen der Figur 1 sieht man zudem die Kurve K1, die eine Indikationsgröße in Abhängigkeit des Drehmomentes darstellt, die auf den Motorstrom zurückgeht. Für die Kurve K1 ist die rechte vertikale Achse relevant. Wird der Motorstrom als Basisgröße für die Indikationsgröße gewählt, besteht kein linearer Zusammenhang zwischen der Indikationsgröße und dem Drehmoment des Motors bei kleinen Drehmomenten. Die richtige Einstellung der Schwellenwerte bzw. Toleranzbereiche ist damit nur bedingt möglich. Wieder ist eine Einschränkung des Überwachungsbereiches hinzunehmen.

Die bisher diskutierten Indikationsgrößen der Kurven K1,K2 sind aus dem Stand der Technik bekannt.

Erfindungsgemäß wird in diesem Ausführungsbeispiel eine Indikationsgröße vorgeschlagen, die aus der Größe des Motorstroms in Kombination mit der Größe des Phasenwinkels gebildet wird. In diesem Ausführungsbeispiel besteht die Indikationsgröße aus dem Produkt des Motorstroms mit dem Cosinus des Phasenwinkels. Die erfindungsgemäße Indikationsgröße ist in Form der Kurve K3 im Graphen der Figur 1 eingezeichnet. Die rechte vertikale Achse ist in Verbindung mit K3 relevant. Es ist deutlich zu sehen, dass die Problembereiche der Indikationsgrößen, die nur auf eine der beiden lastrelevanten Größen zurückgehen, kompensiert wurden. Es ist ein nahezu lineares Verhältnis der Indikationsgröße zum Drehmoment des Motors bzw. Antriebs realisiert worden, wobei keine Problembereiche auftreten. Auf diese Weise kann im gesamten Drehmomentbereich eine Festlegung von Schwellen oder Toleranzbereichen erfolgen, ohne dass der direkte Bezug zwischen Indikationsgröße und Drehmoment sich negativ auf die Lastüberwachung auswirkt.

Mittels der Linearisierung ist beispielsweise ein Keilriemenriss, ein Pumpenleerlauf, die Belastung auf einem Transportband oder ein Werkzeugverschleiß rechtzeitig feststellbar. Hierdurch können Folgeschäden in Anlagen, insbesondere Automatisierungsanlagen vermieden werden.

Weiterhin sind keine zusätzlichen speicherprogrammierbaren Steuerungen notwendig, um den gesamten Drehmomentbereich überwachbar zu machen.

Figur 2 zeigt ein Blockschaltbild eines Ausführungsbeispiels einer Überwachungseinheit 1. Die Überwachungseinheit 1 weist zwei Phasenanschlüsse A1 und A2 auf, die zur elektrischen Verbindung zu jeweils einer Phase eines mehrphasigen Stromversorgungsnetzes 11 vorgesehen sind. Der zu überwachende Motor 2 wird hierbei einerseits an eine der Phasen des Stromversorgungsnetzes 11 angeschlossen und andererseits an den Anschluss A3 der Überwachungseinheit 1. In diesem Ausführungsbeispiel ist die Überwachungseinheit 1 als zweiphasiges Gerät ausgeführt. Die Phasenanschlüsse A1 und A2 können beispielsweise an eine Phase L1 und L2 angeschlossen werden oder auch an eine Phase LX (wobei X = 1, 2, oder 3 ist) und N (Nullleiter). Der Stromkreis, in dem sich der zu überwachende Motor 2 befindet, verläuft teilweise durch die Überwachungseinheit 1. Der Motor 2 ist nicht nur an die Phase L1 angeschlossen, sondern auch über die Überwachungseinheit mit der Phase L2 verbunden. Mittels eines Stromsensors 3 wird der Motorstrom des Motors 2 gemessen. Der Stromsensor 3 kann hierbei als Stromwandler ausgeführt sein, der den Motorstrom auf ein Spannungsinterwall abbildet. Diese abgebildete Spannung wird über eine Leitung zur Mess- und Bewertungseinheit weitergeleitet. Die Mess- und Bewertungseinheit 8 ist weiterhin mit den Phasen L1 und L2 verbunden und ist somit in der Lage, den Motorstrom und den Phasenwinkel zwischen dem Motorstrom und der Versorgungsspannung zu erfassen. Die Mess- und Bewertungseinheit 8 ist beispielsweise aus einem Controller mit der dazu gehörigen Peripherie realisierbar. Die Mess- und Bewertungseinheit 8 wird durch die Spannungsregelung 5 mit Spannung versorgt. Die Spannungsregelung 5 enthält einen Schaltregler 6 und eine Hochvoltstufe 7. Die Spannungsregelung 5 wird von einem Gleichrichter, beispielsweise einem Brückengleichrichter, mit Gleichspannung versorgt. In der Mess- und Bewertungseinheit 8 findet eine Bewertung der gemessenen Größen und/oder eine Voranalyse statt. Die Mess- und Bewertungseinheit 8 ist dazu in die Lage versetzt, mittels der Schaltstufe 10, die mindestens ein Relais enthält, eine Schutzabschaltung oder Schutzeinschaltung durchzuführen. Die Entscheidung für eine Schutzreaktion wird basierend auf der Indikationsgröße/Drehmomentkennlinie ausgelöst. Des Weiteren ist eine Optimierung der Indikationsgrößenbildung mittels der Diagnose- und Anzeigeeinheit 9 möglich. Die Diagnose- und Anzeigeeinheit 9 kann beispielsweise als Bedienteilleiterplatte ausgeführt werden. Somit kann der Benutzer motorspezifische oder anwendungsspezifische charakterisierende Merkmale, die für eine Schutzabschaltung oder Schutzeinschaltung relevant sind, in eine Kennlinie integrieren. Das Ändern einer Kennlinie resultiert hierbei in einer Änderung der Berechnungsweise der Integrationsgröße. Wichtig ist, dass diese Berechung stets sowohl auf den ermittelten Motorstrom und auch den ermittelten Phasenwinkel zurückgeht.

Zusammenfassend betrifft die Erfindung eine Überwachungseinheit zur Lastüberwachung eines elektrischen Motors. Die Überwachungseinheit stellt eine Überwachung der Motorlast über den gesamten Drehmomentbereich sicher. Hierzu bedient sich die Überwachungseinheit einer linearisierenden Anpassung der Indikationsgröße. Zunächst ist die Überwachungseinheit zur Erfassung eines Motorstroms und eines Phasenwinkels zwischen Versorgungsspannung und dem Motorstrom im Betriebzustand des Motors vorgesehen. Des Weiteren weist diese Mittel zur Bildung einer Indikationsgröße aus dem Motorstrom und dem Phasenwinkel als Maß zur Überwachung der elektrischen Last des Motors auf.

## Patentansprüche

1. Überwachungseinheit (1) zur Lastüberwachung eines elektrischen Motors (2), wobei die Überwachungseinheit (1) zur Erfassung eines Motorstroms und eines Phasenwinkels zwischen Versorgungsspannung und dem Motorstrom im Betriebzustand des Motors (2) vorgesehen ist, **dadurch gekennzeichnet, dass** die Überwachungseinheit (1) Mittel (3) zur Bildung einer Indikationsgröße aus dem Motorstrom und dem Phasenwinkel als Maß zur Überwachung der elektrischen Last des Motors (2) aufweist, wobei die Indikationsgröße derart gewählt ist, dass der Schwellenwert einem Drehmoment des Motors (2) innerhalb eines durch ein minimal mögliches Drehmoment und ein maximal mögliches Drehmoment festgelegten Drehmomentintervalls zuordenbar ist.

2. Überwachungseinheit (1), nach Anspruch. 1, wobei die Indikationsgröße aus dem Produkt des Motorstroms mit dem Cosinus des Phasenwinkels gebildet ist.

3. Überwachungseinheit (1) nach einem der Ansprüche 1 oder 2, wobei die Indikationsgröße aus dem Produkt einer ersten Funktion, die aus dem Motorstrom gebildet ist, und einer zweiten Funktion, die aus dem Phasenwinkel gebildet ist, gebildet ist.

4. Überwachungseinheit (1) nach einem der vorhergehenden Ansprüche, wobei die Indikationsgröße ein im Wesentlichen lineares Verhältnis zum Drehmoment des Motors (2) aufweist.

5. Überwachungseinheit (1) nach einem der vorhergehenden Ansprüche, wobei die Indikationsgröße im Wesentlichen proportional zur Last des Motors (2) ist.

6. Überwachungseinheit (1) nach einem der vorhergehenden Ansprüche, wobei die Überwachungseinheit (1) zur Einstellung mindestens eines Schwellenwerts und/oder eines Toleranzbereichs der Indikationsgröße zur Einleitung mindestens einer Schutzmassnahme vorgesehen ist.

7. Verfahren zur Lastüberwachung eines elektrischen Motors (2), wobei ein Motorstrom und ein Phasenwinkel zwischen Versorgungsspannung und dem Motorstrom im Betriebzustand des Motors (2) erfasst werden, **dadurch gekennzeichnet, dass** eine Indikationsgröße aus dem Motorstrom und dem Phasenwinkel als Maß zur Überwachung der elektrischen Last des Motors (2) gebildet wird, wobei mindestens ein Schwellenwert und/oder ein Toleranzbereich der Indikationsgröße einem Drehmoment des Motors (2) innerhalb eines durch ein minimal mögliches Drehmoment und ein maximal mögliches Drehmoment festgelegten Drehmomentintervalls zugeordnet wird.

8. Verfahren nach Anspruch 7, wobei die Indikationsgröße aus dem Produkt des Motorstroms mit dem Cosinus des Phasenwinkels gebildet wird.

9. Verfahren nach einem der Ansprüche 7 oder 8, wobei die Indikationsgröße aus dem Produkt einer ersten Funktion, die aus dem Motorstrom gebildet wird, und einer zweiten Funktion, die aus dem Phasenwinkel gebildet wird, gebildet wird.

10. Verfahren nach einem der vorhergehenden Ansprüche, wobei die Indikationsgröße ein im Wesentlichen lineares Verhältnis zum Drehmoment des Motors (2) aufweist.

11. Verfahren nach einem der vorhergehenden Ansprüche, wobei die Indikationsgröße im Wesentlichen proportional zur Last des Motors (2) ist.

12. Verfahren nach einem der vorhergehenden Ansprüche, wobei mindestens der Schwellenwert und/oder der Toleranzbereich der Indikationsgröße zur Einleitung mindestens einer Schutzmassnahme eingestellt werden.

## Claims

1. Monitoring unit (1) for monitoring the load of an electric motor (2), wherein the monitoring unit (1) is intended to record the motor current and the phase angle between the supply voltage and the motor current in the operating state of the motor (2), **characterized in that** the monitoring unit (1) has means (3) for formation of an indication variable from the motor current and the phase angle as a measure for monitoring the electrical load of the motor (2), wherein the indication variable is chosen so that the threshold value can be associated with a torque of the motor (2) within a torque interval which is defined by the minimum possible torque and the maximum possible torque.

2. Monitoring unit (1) according to Claim 1, wherein the indication variable is formed from the product of the motor current and the cosine of the phase angle.

3. Monitoring unit (1) according to one of Claims 1 or 2, wherein the indication variable is formed from the product of a first function, which is formed from the motor current, and a second function, which is formed from the phase angle.

4. Monitoring unit (1) according to one of the preceding claims, wherein the indication variable is essentially linearly related to the torque of the motor (2).

5. Monitoring unit (1) according to one of the preceding claims, wherein the indication variable is essentially proportional to the load of the motor (2).

6. Monitoring unit (1) according to one of the preceding claims, wherein the monitoring unit (1) is intended to set at least one threshold value and/or one tolerance band of the indication variable in order to initiate at least one protective measure.

7. Method for monitoring the load of an electric motor (2), wherein the motor current and the phase angle between the supply voltage and the motor current in the operating state of the motor (2) are recorded, **characterized in that** an indication variable is formed from the motor current and the phase angle as a measure for monitoring the electrical load of the motor (2), wherein at least one threshold value and/or one tolerance band of the indication variable are associated with the torque of the motor (2) within a torque interval which is defined by the minimum possible torque and the maximum possible torque.

8. Method according to Claim 7, wherein the indication variable is formed from the product of the motor current and the cosine of the phase angle.

9. Method according to one of Claims 7 or 8, wherein the indication variable is formed from the product of a first function, which is formed from the motor current, and a second function, which is formed from the phase angle.

10. Method according to one of the preceding claims, wherein the indication variable is essentially linearly related to the torque of the motor (2).

11. Method according to one of the preceding claims, wherein the indication variable is essentially proportional to the load of the motor (2).

12. Method according to one of the preceding claims, wherein at least one threshold value and/or one tolerance band of the indication variable are/is set in order to initiate at least one protective measure.

## Revendications

1. Unité ( 1 ) de contrôle de la charge d'un moteur ( 2 ) électrique, l'unité ( 1 ) de contrôle étant prévue pour la détection d'un courant du moteur et d'un angle de phase entre la tension d'alimentation et le courant du moteur lorsque le moteur ( 2 ) est en état de fonctionnement, **caractérisé en ce que** l'unité ( 1 ) de contrôle a des moyens ( 3 ) de formation d'une grandeur d'indication à partir du courant du moteur et de l'angle de phase en tant que mesure pour le contrôle de la charge électrique du moteur, la grandeur d'indication étant choisie de façon à ce que la valeur de seuil puisse être associée à un couple de rotation du moteur ( 2 ) dans un intervalle de couple de rotation fixé par un couple de rotation possible minimum et un couple de rotation possible maximum.

2. Unité ( 1 ) de contrôle suivant la revendication 1, dans laquelle la grandeur d'indication est formée du produit du courant du moteur par le cosinus de l'angle de l'angle de phase.

3. Unité ( 1 ) de contrôle suivant la revendication 1 ou 2, dans laquelle la grandeur d'indication est formée du produit d'une première fonction, qui est formée à partir du courant du moteur, et d'une deuxième fonction, qui est formée à partir de l'angle de phase.

4. Unité ( 1 ) de contrôle suivant l'une des revendications précédentes, dans laquelle la grandeur d'indication a un rapport sensiblement linéaire au couple de rotation du moteur ( 2 ).

5. Unité ( 1 ) de contrôle suivant l'une des revendications précédentes, dans laquelle la grandeur d'indication est sensiblement proportionnelle à la charge du moteur ( 2 ).

6. Unité ( 1 ) de contrôle suivant l'une des revendications précédentes, dans laquelle l'unité ( 1 ) de contrôle est prévue pour le réglage d'au moins une valeur de seuil et/ou d'une plage de tolérance de la grandeur d'indication pour le lancement d'au moins une mesure de protection.

7. Procédé de contrôle de la charge d'un moteur ( 2 ) électrique, dans lequel on détecte un courant du moteur et un angle de phase entre la tension d'alimentation et le courant du moteur lorsque le moteur ( 2 ) est en état de fonctionnement, **caractérisé en ce que** l'on forme une grandeur d'indication à partir du courant du moteur et de l'angle de phase comme mesure pour le contrôle de la charge électrique du moteur ( 2 ), au moins une valeur de seuil et/ou une plage de tolérance de la grandeur d'indication étant associées à un couple de rotation du moteur ( 2 ) dans un intervalle de couple de rotation fixé par un couple de rotation possible minimum et un couple de rotation possible maximum.

8. Procédé suivant la revendication 7, dans lequel on forme la grandeur d'indication à partir du produit du courant du moteur par le cosinus de l'angle de phase.

9. Procédé suivant l'une des revendications 7 ou 8, dans lequel on forme la grandeur d'indication à partir du produit d'une première fonction, qui est formée à partir du courant du moteur, et d'une deuxième fonction, qui est formée à partir de l'angle de phase.

10. Procédé suivant l'une des revendications précédentes, dans laquelle la grandeur d'indication a un rapport sensiblement linéaire au couple de rotation du moteur ( 2 ).

11. Procédé suivant l'une des revendications précédentes, dans laquelle la grandeur d'indication est sensiblement proportionnelle à la charge du moteur ( 2 ).

12. Procédé suivant l'une des revendications précédentes, dans laquelle l'unité ( 1 ) de contrôle est prévue pour le réglage d'au moins une valeur de seuil et/ou d'une plage de tolérance de la grandeur d'indication pour le lancement d'au moins une mesure de protection.
